(19) Europäisches Patentamt / European Patent Office / Office européen des brevets

(11) **EP 4 035 957 B1**

(12) **EUROPEAN PATENT SPECIFICATION**

(45) Date of publication and mention
of the grant of the patent:
**06.09.2023 Bulletin 2023/36**

(21) Application number: **22152609.8**

(22) Date of filing: **21.01.2022**

(51) International Patent Classification (IPC):
**B60T 7/04** *(2006.01)* **B60T 13/68** *(2006.01)*
**B60T 15/04** *(2006.01)* **B60T 1/093** *(2006.01)*
**B60T 10/04** *(2006.01)* **F16D 57/06** *(2006.01)*

(52) Cooperative Patent Classification (CPC):
**B60T 13/686; B60T 1/093; B60T 7/045;
B60T 10/04; B60T 15/041; F16D 57/06;**
B60T 2201/06; B60Y 2300/90

(54) **METHOD OF CONTROLLING A PARKING BRAKE OF A VEHICLE**

VERFAHREN ZUR STEUERUNG EINER FESTSTELLBREMSE EINES FAHRZEUGS

PROCÉDÉ DE COMMANDE D'UN FREIN DE STATIONNEMENT D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.01.2021 IT 202100001601**

(43) Date of publication of application:
**03.08.2022 Bulletin 2022/31**

(73) Proprietor: **Robert Bosch GmbH
70442 Stuttgart (DE)**

(72) Inventors:
• **Arcolia, Alessandro
Alessandria (IT)**
• **Mueller, Matthias
Langenau (DE)**

(56) References cited:
**WO-A1-2013/029054     DE-A1-102011 008 707**

**Description**

TECHNICAL FIELD

The present invention relates to the field concerning a method for releasing a parking brake of a vehicle comprising a drive motor and a first and a second hydraulic machine, in which the drive motor drives the first hydraulic machine, which in turn supplies the pressure required by the second hydraulic machine to facilitate the movement thereof, wherein the second hydraulic machine may be coupled with means for moving the vehicle.

BACKGROUND ART

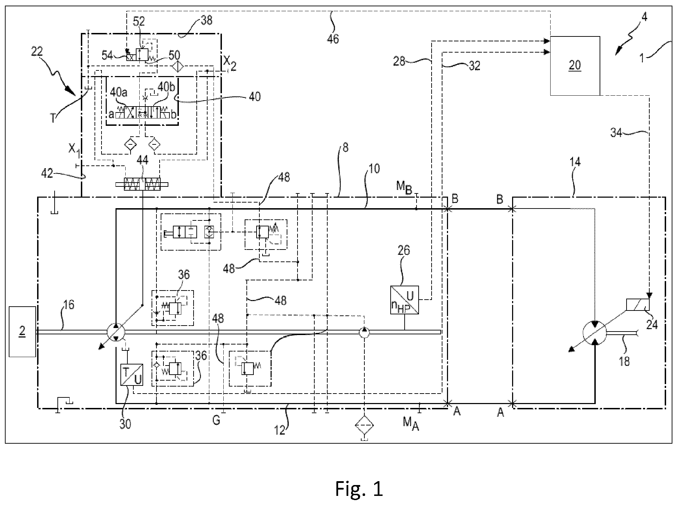

Figure 1 shows a conventional hydraulic diagram of a work vehicle according to the state of the art, which will be described in more detail later. As can be seen in the figure, work vehicles are typically equipped with a hydrostatic transmission comprising a first and a second hydraulic machine. In standard conditions, the first hydraulic machine receives a driving force from a motor and the second hydraulic machine is configured to transmit the hydraulic energy received from the first hydraulic machine in the form of mechanical energy to an external user (for example a motor shaft). The motor may be any internal combustion engine or electric motor or any other item capable of providing rotation to the first hydraulic machine.

Furthermore, these work vehicles have a parking brake which allows movement of the work vehicle to be prevented when said vehicle is stationary. This parking brake is generally controlled automatically in order to facilitate use thereof by an operator.

A typical logic by which this automatic control is achieved is for the operator to engage the parking brake, when the vehicle is in a stopped condition and there is no need for movement, by means of the operating pedal. Automatic release is then achieved when the operator needs to move vehicle, for example by means of the operating pedal.

Generally, there is no specific coordination between releasing the parking brake and preparing the first hydraulic machine for a smooth, seamless start in all load conditions. For some applications, the parking brake release times are known to be used to generate an overlap of the propulsion and the release of the parking brake. Additionally, a logic which is sometimes applied requires the drive pedal to be pressed downwards slightly in order to release the parking brake.

The drawback of the solution described above is that during the parking brake release transient, the propulsion torque does not adapt to the load conditions and the driver's expectations and sometimes the vehicle behaves in an undesirable manner. For example, vehicles that are parked facing upwards on sloping ground experience a drawback, namely that when the driver decides to drive forwards up the slope, the vehicle will reverse slightly after the parking brake is released before moving forwards as required by the driver. In particular, the vehicle will reverse, in this case, until the first hydraulic machine provides torque that is either greater than or equal to the torque needed to keep the vehicle stationary on this sloping ground (taking into account both the load due to gravity and the kinematic losses).

A further drawback that may occur is that, if the vehicle is positioned facing downwards on a slope, one would simply have to release the parking brake without applying any additional torque in order to prevent an initial jolt.

Comfort oriented hill-hold functions for working machines already known in the art are disclosed in DE 10 2011 008707 A1 and WO 2013/029054 A1.

The object of the present invention is precisely to overcome the drawbacks described above by providing a method for releasing the parking brake which can automatically prevent the vehicle behaving in an undesirable manner.

SUMMARY

The present invention relates to a method for controlling the characteristics listed in Claim 1.

Through this solution it is actually possible to allow the vehicle parking brake to be released only once one is sure that the vehicle cannot behave in an undesirable manner, all in a fully automatic mode. Therefore, the operator driving the vehicle will not unexpectedly find the vehicle behaving in an undesirable manner. Furthermore, this solution can work even if the vehicle is not equipped with ground gradient sensors, which makes the present invention feasible on any kind of vehicle (both the more sophisticated ones comprising sensors for detecting ground gradient and those less sophisticated ones that do not comprise these systems).

BRIEF DESCRIPTION OF THE FIGURES

The present invention will now be described with reference to the annexed figures in which the same reference numbers and/or signs denote the same and/or similar and/or corresponding parts of the system.

    Figure 1 shows a hydraulic diagram of a propulsion element of a work vehicle according to a commonly known arrangement;

    Figure 2 shows a logic diagram of a method for controlling a parking brake of a work vehicle according to an embodiment of the present invention.

DETAILED DESCRIPTION

The present invention will now be described with reference to particular embodiments, as illustrated in the appended drawings. However, the present invention is not limited to the particular embodiments described in the following detailed description and shown in the figures, rather the embodiments described are merely non-limiting examples of the various aspects of the present invention, whose object is defined by the claims. Further modifications and variations of the present invention will be clear to a person skilled in the art.

In the present description, the term 'vehicle' means any mechanical vehicle driven by humans (or remotecontrolled vehicle) used to transport people, animals, or objects, whether usable on or off the roads, such as, for example, on construction sites or in quarries or mines, etc. Therefore, one example of a vehicle may be, for example, a construction machine such as a wheel tractor-scraper. In general, 'vehicle' means any means capable of moving from one location to another.

As shown in Figure 1, a propulsion element 1 of a commonly known work vehicle has a drive machine 2 consisting of an internal combustion engine, such as a diesel engine, and a hydrostatic transmission 4. The hydrostatic transmission 4 has a first hydraulic machine 8, consisting of an axial piston pump in the inclined plate structure, which is in fluid communication, by means of two work lines 10, 12, with a second hydraulic machine 14 consisting of an axial piston motor within the inclined axis structure, in a closed hydraulic circuit. It is clear that the present invention can also be made in a swashplate piston engine or a radial piston engine. The first hydraulic machine 8 is coupled to the drive machine 2 by means of a transmission shaft 16. A transmission shaft 18 of the second hydraulic machine 14 is coupled to an output (not shown) of the propulsion element 1. In the particular example shown, both hydraulic machines 8, 14 feature an adjustable displacement volume. They are configured so as to be able to work in all four quadrants, in both torque directions, both as a hydraulic pump and as a hydraulic motor. However, the present invention could clearly also work if the motor driving the gearbox were a fixed-displacement motor (i.e. having a fixed displacement volume).

The hydrostatic transmission 4 also features a control device 20, in particular for controlling the torque of the drive shaft 18. As regards signals, a first adjustment device 22 for adjusting the first hydraulic machine 8 is connected to the control device 20, which is designed to adjust the first displacement volume, and a second adjusting device 24 for the second hydraulic machine 14 is designed to adjust the second displacement volume.

The hydrostatic transmission 4 has speed (rpm) sensor 26, by means of which the first speed of the first hydraulic machine 8 can be measured. The speed sensor 26 is connected, as regards signals, to the control device 20 by means of the signal line 28. Alternatively, the speed may also be measured from the speed of the drive machine 2 via a CAN bus connection. In addition, the transmission 4 features a temperature sensor 30 designed to measure a temperature of the pressure medium and any leakage current in the first hydraulic machine 8. The latter is connected, as regards signals, to the control device 20 by means of a signal line 32.

Theoretically, downstream of the hydrostatic transmission 4 there can be a multi-stage mechanical transmission connected so that the system can provide a higher speed range than the propulsion element 1.

In the case of the example shown, the second displacement volume is adjusted by means of the adjustment device 24 electro-proportionally. For this purpose, the adjustment device 24 features a hydraulic positioning cylinder (not shown), whose reciprocally active pressure chambers can be respectively supplied with a pressure medium, via a pressure regulating valve (not shown), which can be adjusted electro-proportionally. The electro-proportional regulation results in continuous adjustment of the displacement volume. The adjustment is therefore proportional to a reference value signal coming from the control device 20 via the signal line 34. The advantage of said control concept for the second hydraulic machine 14 lies in the fact that the second effective displacement volume essentially corresponds to the reference value of the second hydraulic machine 14 required by the control device 20.

The work lines 10, 12 are protected against overload by respective pressure-limiting valves 36 with an anticavitation function. The first hydraulic machine 8 furthermore features a control pressure connection G, to which constant control pressure is applied.

The adjustment device 22 for the first hydraulic machine 8 features a pressure reduction valve 38. The latter may be connected, by means of a 4/3-way switching valve 40, to a pressure medium chamber of a positioning cylinder 42 , whose piston 44 is coupled to a swashplate in the first hydraulic machine 8 for adjusting the first displacement volume.

The pressure reduction valve 38 is connected, as regards signals, to the control device 20 by means of a signal line 46. The control pressure supplied by the connection G is present due to a control pressure line 48, connected to a control pressure input 50 of the pressure reducing valve 38.

A valve body of the pressure reduction valve 38 is pre-tensioned, by means of a spring, into a final position, in which a control pressure output 52 of the pressure reduction valve 38 forms a connection with a tank T by means of a pressure medium. An electromagnet 54, which can be powered by means of the signal line 46, counters the force of the spring.

If powered, the valve body of the pressure reducing valve 38 moves from the aforesaid final position (connection of the control pressure output 52 with the tank T) to intermediate positions, in which the other final position has an increasing inflow which releases the fluid connection between the control pressure inlet 50 and the control pressure output 52. Consequently, as the power supply to the electromagnet 54 increases, the control pressure at the control pressure output 52 increases. The control pressure output 52 is connected, via a control pressure line, to the 4/3-way switching valve 40. Depending on the switching position 40a or 40b, the pressure medium applies strain to one or the other of the pressure medium chambers of the positioning cylinder 42. The 4/3 way switching valve 40 acts as a travel direction valve.

Clearly, the method for adjusting the first hydraulic machine 8 described above is in no way binding and, as will also become clear in the description that follows, the present invention may be applied to any system for controlling the first hydraulic machine, for example to a first hydraulic machine with a hydraulic or electro-hydraulic pump drive, with or without feedback, with or without position sensors.

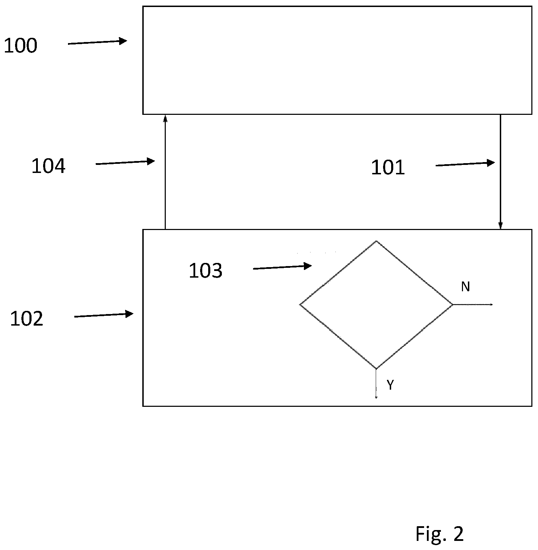

With reference to Figure 2, the method for controlling a parking brake of a vehicle comprising a propulsion element 1, such as that shown in Figure 1, will now be explained in detail.

In one state 100, the vehicle parking brake is applied and the vehicle is in a parked state. In this state, the value of a variable which depends on the upstream and downstream pressure difference of the said second hydraulic machine 14 is saved before the vehicle has stopped completely and therefore reached the stationary state.

This variable could be the said pressure itself or the torque produced by the said second hydraulic machine 14 before the machine is stopped by means of the parking brake. In this case, the torque is calculated as follows:

$$T_{Load} = \frac{Vg_{Mot} * \Delta p}{20 * \pi} * r_G$$

Where $T_{Load}$ is the torque of the second hydraulic machine 14, $Vg_{Mot}$ is the displacement of the second hydraulic machine 14, $\Delta p$ is the difference between the pressure up and downstream of the second hydraulic machine while $r_G$ is the gear ratio. The advantage of this variable is that the logic still applies even if the gear ratio is different when the vehicle is stationary or in the event that the displacement of the second hydraulic machine 14 is different. Indeed, as will become clearer later in the description, this variable is measured before re-starting and, in the event that a different gear has been engaged, the new gear ratio will be considered in the calculation of the new torque. If this variable is chosen, in addition to the difference in pressure up and downstream of the second hydraulic machine 14, the displacement of the second hydraulic machine 14 must also clearly be measured.

Alternatively, if for example the pressure and the flow rate were measured when the vehicle was not yet stationary, this variable could be the torque produced by the second hydraulic machine 14 minus the torque due to the acceleration of the said vehicle. In this case, the torque is calculated as follows:

$$T_{Load} = \frac{Vg_{Mot} * \Delta p}{20 * \pi} * r_G - r_W * \frac{a_V * m_V}{2}$$

Where $T_{Load}$ is the torque of the second hydraulic machine 14, $Vg_{Mot}$ is the displacement of the second hydraulic machine 14, $\Delta p$ is the difference between the pressure up and downstream of the second hydraulic machine, $r_G$ is the gear ratio, and $a_V$ is the vehicle's acceleration while $m_V$ is the mass of the said vehicle. This variable has the advantage of also considering the part of the torque due to the acceleration of the vehicle and therefore obtaining a torque due solely to the external load (the condition of the ground where the vehicle is parked and the weight of the said vehicle).

If the vehicle receives a request to release the parking brake, for example by means of an operator, the vehicle switches to state 102 (as shown by arrow 101). In state 102, the hydraulic transmission is checked and controlled and the parking brake is released only if the check in 103 (which will be described in detail in the following paragraph) has given a positive result. However, there are conditions, which will be described later, in which the check on this variable does not have to be performed as it is unnecessary and it is possible to proceed by directly releasing the parking brake.

Indeed, this check on this variable only occurs in the following two cases:

- If the vehicle is parked facing upwards on a vertical slope and there is a request to release the parking brake in order to drive forwards, up the said slope;

- If the vehicle is parked facing downwards on a vertical slope and there is a request to release the parking brake in order to reverse, to drive up the said slope;

If the circumstances do not fall under either of these two cases, the operator may release the parking brake directly. Therefore, if it is found, in state 102, that one of the following two situations listed below has occurred, the parking brake is released immediately:

- If the vehicle is parked facing upwards on a vertical slope and there is a request to release the parking brake in order to reverse, down the said slope;

- If the vehicle is parked facing downwards on a vertical slope and there is a request to release the parking brake in order to move forwards, down the said slope.

The detection of whether the said vehicle is facing upwards or downwards is performed by reading whether the pressure difference up and downstream of the said second hydraulic machine 14 is positive or negative. Alternatively, this may be established using means configured to measure the gradient of the ground along which the said vehicle is parked.

If the check on this variable must be carried out, the current absolute value of the variable described above is measured (or calculated in the case of the torque) and compared with the absolute value of the same variable in state 100. If the value is greater, then the parking brake can be released. If this state has not yet occurred, the check on the variable is repeated until this state occurs and it is therefore possible to release the parking brake and return from state 104 to state 100 until a new command to engage the parking brake is received.

The following paragraphs will describe four situations in which this vehicle may find itself in and how the method described above is applied in each of these situations.

The first two situations arise in the event that the vehicle is stopped while being driven upwards and the driving brake is engaged.

If the operator requires the vehicle to be moved in the opposite direction to the direction of travel prior to stopping, the parking brake will be released immediately.

If, on the other hand, the operator requires the vehicle to be driven in the same direction as it had been travelling prior to stopping, the check described above takes place. The current value of one of the pressure-dependent quantities is compared with the absolute value of the same variable before the vehicle was stopped. If the current value is greater than or equal to the value from before the vehicle was stopped, then the parking brake can be released. If, on the other hand, the current value is lower, the check will be repeated until this condition is met and the parking brake can be released.

The other two situations arise in the event that the vehicle is stopped while being driven downwards and the driving brake is engaged.

If the operator requires the vehicle to move in the same direction as it was travelling prior to stopping, the parking brake will be released immediately.

If, on the other hand, the operator requires the vehicle to move in the opposite direction to the direction of travel prior to stopping, the check described above takes place. The current value of one of the pressure-dependent quantities is compared with the absolute value of the same variable before the vehicle was stopped. If the current value is greater than or equal to the value from before the vehicle was stopped, then the parking brake can be released. If, on the other hand, the current value is lower, the check will be repeated until this condition is met and the parking brake can be released.

Although the present invention has been described with reference to the embodiments described above, it is clear to a person skilled in the art that various modifications, variations and improvements may be made to the present invention based on the teachings set out above and remaining within the scope of the annexed claims, without departing from the object and scope of the invention.

Finally, those areas that are considered known to a person skilled in the art have not been described in order not to unnecessarily overshadow the invention described.

Consequently, the invention is not limited to merely the embodiments described above, but only by the scope of the annexed claims.

## Claims

1. A method of controlling a parking brake of a vehicle, said vehicle comprising a drive machine (2), a first hydraulic machine (8) and a second hydraulic machine (14), said drive machine (2) being configured to drive said first hydraulic machine (8), said first hydraulic machine (8) having a first displacement volume, and said second hydraulic machine (14) having a second displacement volume being arranged in hydraulic connection with said first hydraulic machine (8) and being configured to be coupled to drive means of said vehicle, which are configured to provide a movement of said vehicle, said method being **characterized in that:**
   Prior to a release of said parking brake a variable dependent on a pressure difference between upstream and downstream of said second hydraulic machine (14) is compared with the same variable measured prior to an engagement of said parking brake, wherein said parking brake is released if the absolute value of said variable measured prior to release of said parking brake is greater than the absolute value of the same variable measured prior to engagement of said parking brake.

2. Method according to claim 1 wherein said variable is the absolute value of the pressure realized by said first hydraulic machine (8).

3. Method according to claim 1 wherein said variable corresponds to the torque of said second hydraulic machine (14), wherein said torque is calculated after measuring said pressure difference between upstream and downstream of said second hydraulic machine
   (14) and preferably the displacement volume of said second hydraulic machine (8).

4. Method according to claim 1, wherein said variable corresponds to the torque of said second hydraulic machine (14), wherein said torque is calculated after measuring said pressure difference between upstream and downstream of said second hydraulic machine
   (14) and preferably the displacement volume of said second hydraulic machine (8), from which the torque due to the acceleration of the vehicle is subtracted, so as to obtain a torque due to the load of said vehicle only.

5. Method according to any one of claims 1 to 4, wherein said comparison of said absolute value of said variable is carried out only under one of the following conditions:

Where said vehicle is along an uphill slope and where there is a demand for release said parking brake to proceed forward along said slope; and Where said vehicle is on a downhill slope and where there is a request for release of said parking brake to reverse down said slope.

6. Method according to any one of claims 1 to 5, wherein said parking brake is released without performing said comparison of said absolute value of said variable under any one of the following conditions: Where said vehicle is located along an uphill slope and where there is a demand for release of said parking brake in order to reverse along said uphill slope; and Where said vehicle is on a downhill slope and where there is a demand for release of said parking brake to proceed forward on said downhill slope.

7. A method according to any one of claims 5 or 6, wherein the detection of whether said vehicle is along an uphill slope or along a downhill slope is provided by means of the sign of said pressure difference between upstream and downstream of said second hydraulic machine (14).

8. A method according to any one of claims 5 or 6, wherein the detection of whether said vehicle is along an uphill slope or along a downhill slope is provided by means of detection means configured to detect the slope of the ground along which said vehicle is stationed.

9. Method according to any one of claims 1 to 8, wherein said method comprises the following steps:

a. Receiving a command to engage said parking brake in said vehicle;
b. Measuring a pressure difference between upstream and downstream of said second hydraulic machine (14) and preferably the displacement volume of said second hydraulic machine (14);
c. Engaging said parking brake;
d. Receiving a command to release said parking brake;
e. Releasing said parking brake if the absolute value of said variable measured prior to release of said parking brake is greater than the absolute value of the same variable measured prior to engagement of said parking brake.

10. A method according to any one of claims 1 to 9, wherein said vehicle is a mobile operating machine.

11. Method according to any one of claims 1 to 10, wherein said first displacement volume of said first hydraulic machine (8) is configured to be adjusted and wherein preferably said second displacement volume of said second hydraulic machine (14) can be adjusted.

**Patentansprüche**

1. Verfahren zum Steuern einer Feststellbremse eines Fahrzeugs, wobei das Fahrzeug eine Antriebsmaschine (2), eine erste hydraulische Maschine (8) und eine zweite hydraulische Maschine (14) umfasst, wobei die Antriebsmaschine (2) konfiguriert ist, um die erste hydraulische Maschine (8) anzutreiben, wobei die erste hydraulische Maschine (8) ein erstes Fördervolumen aufweist und die zweite hydraulische Maschine (14) ein zweites Fördervolumen aufweist, in hydraulischer Verbindung mit der ersten hydraulischen Maschine (8) angeordnet und so konfiguriert ist, dass sie an Antriebseinrichtungen des Fahrzeugs gekoppelt ist, die konfiguriert sind, um eine Bewegung des Fahrzeugs bereitzustellen, wobei das Verfahren **dadurch gekennzeichnet ist, dass** vor einem Lösen der Feststellbremse eine von einer Differenz zwischen dem Druck vor und hinter der zweiten hydraulischen Maschine (14) abhängige Variable mit derselben Variable, die vor einer Feststellung der Feststellbremse gemessen wird, verglichen wird, wobei die Feststellbremse gelöst wird, wenn der Absolutwert der Variable, die vor dem Lösen der Feststellbremse gemessen wird, größer ist als der Absolutwert derselben Variable, die vor der Feststellung der Feststellbremse gemessen wird.

2. Verfahren nach Anspruch 1, wobei die Variable der Absolutwert des durch die erste hydraulische Maschine (8) realisierten Drucks ist.

3. Verfahren nach Anspruch 1, wobei die Variable mit dem Drehmoment der zweiten hydraulischen Maschine (14) korrespondiert, wobei das Drehmoment nach dem Messen der Differenz zwischen dem Druck vor und hinter der zweiten hydraulischen Maschine (14) und vorzugsweise des Fördervolumens der zweiten hydraulischen Maschine (8) berechnet wird.

4. Verfahren nach Anspruch 1, wobei die Variable mit dem Drehmoment der zweiten hydraulischen Maschine (14) korrespondiert, wobei das Drehmoment nach dem Messen der Differenz zwischen dem Druck vor und hinter der zweiten hydraulischen Maschine (14) und vorzugsweise des Fördervolumens der zweiten hydraulischen Maschine (8) berechnet wird, von dem das durch die Beschleunigung des Fahrzeugs verursachte Drehmoment subtrahiert wird, um ein nur durch die Last des Fahrzeugs verursachtes Drehmoment zu erhalten.

5. Verfahren nach einem der Ansprüche 1 bis 4, wobei der Vergleich des Absolutwerts der Variable nur unter einer der folgenden Bedingungen ausgeführt wird:

wenn sich das Fahrzeug auf einer Steigung befindet und wenn eine Notwendigkeit des Lösens der Feststellbremse zum Vorwärtsfahren auf der Steigung gegeben ist; und
wenn sich das Fahrzeug auf einem Gefälle befindet und wenn eine Aufforderung zum Lösen der Feststellbremse zum Zurückfahren auf dem Gefälle vorliegt.

6. Verfahren nach einem der Ansprüche 1 bis 5, wobei die Feststellbremse gelöst wird, ohne den Vergleich des Absolutwerts der Variable unter einer der folgenden Bedingungen durchzuführen:
wenn sich das Fahrzeug auf einer Steigung befindet und wenn eine Notwendigkeit des Lösens der Feststellbremse zum Zurückfahren auf der Steigung gegeben ist; und wenn sich das Fahrzeug auf einem Gefälle befindet und wenn eine Notwendigkeit des Lösens der Feststellbremse zum Vorwärtsfahren auf dem Gefälle gegeben ist.

7. Verfahren nach Anspruch 5 oder 6, wobei die Erkennung, ob sich das Fahrzeug auf einer Steigung oder auf einem Gefälle befindet, mittels des Zeichens der Differenz zwischen dem Druck vor und hinter der zweiten hydraulischen Maschine (14) bereitgestellt wird.

8. Verfahren nach Anspruch 5 oder 6, wobei die Erkennung, ob sich das Fahrzeug auf einer Steigung oder auf einem Gefälle befindet, mittels Erkennungseinrichtungen, die konfiguriert sind, um die Steigung oder das Gefälle des Bodens, auf dem das Fahrzeug positioniert ist, zu erkennen, bereitgestellt wird.

9. Verfahren nach einem der Ansprüche 1 bis 8, wobei das Verfahren die folgenden Schritte umfasst:

a. Empfangen eines Befehls zum Feststellen der Feststellbremse in dem Fahrzeug;
b. Messen einer Differenz zwischen dem Druck vor und hinter der zweiten hydraulischen Maschine (14) und vorzugsweise des Fördervolumens der zweiten hydraulischen Maschine (14);
c. Feststellen der Feststellbremse;
d. Empfangen eines Befehls zum Lösen der Feststellbremse;

e. Lösen der Feststellbremse, wenn der Absolutwert der Variable, die vor dem Lösen der Feststellbremse gemessen wird, größer ist als der Absolutwert derselben Variable, die vor der Feststellung der Feststellbremse gemessen wird.

10. Verfahren nach einem der Ansprüche 1 bis 9, wobei das Fahrzeug eine mobile Arbeitsmaschine ist.

11. Verfahren nach einem der Ansprüche 1 bis 10, wobei das erste Fördervolumen der ersten hydraulischen Maschine (8) so konfiguriert ist, dass es angepasst werden kann, und wobei das zweite Fördervolumen der zweiten hydraulischen Maschine (14) vorzugsweise angepasst werden kann.

**Revendications**

1. Procédé de commande d'un frein de stationnement d'un véhicule, ledit véhicule comprenant une machine d'entraînement (2), une première machine hydraulique (8) et une deuxième machine hydraulique (14), ladite machine d'entraînement (2) étant configurée pour entraîner ladite première machine hydraulique (8), ladite première machine hydraulique (8) étant pourvue d'une première cylindrée, et ladite deuxième machine hydraulique (14) étant pourvue d'une deuxième cylindrée, étant agencée en liaison hydraulique avec ladite première machine hydraulique (8) et étant configurée pour être accouplée à des moyens d'entraînement dudit véhicule, lesquels sont configurés pour animer ledit véhicule d'un mouvement, ledit procédé étant **caractérisé en ce que :** préalablement à un desserrage dudit frein de stationnement, une variable dépendant d'une différence de pression entre l'amont et l'aval de ladite deuxième machine hydraulique (14) est comparée à la même variable mesurée préalablement à un serrage dudit frein de stationnement, ledit frein de stationnement étant desserré si la valeur absolue de ladite variable mesurée préalablement au desserrage dudit frein de stationnement est supérieure à la valeur absolue de la même variable mesurée préalablement au serrage dudit frein de stationnement.

2. Procédé selon la revendication 1, dans lequel ladite variable est la valeur absolue de la pression atteinte par la première machine hydraulique (8).

3. Procédé selon la revendication 1, dans lequel ladite variable correspondant au couple de ladite deuxième machine hydraulique (14), ledit couple étant calculé après avoir mesuré ladite différence de pression entre l'amont et l'aval de ladite deuxième machine hydraulique (14) et, de préférence, la cylindrée de ladite deuxième machine hydraulique (8).

**4.** Procédé selon la revendication 1, dans lequel ladite variable correspond au couple de ladite deuxième machine hydraulique (14), ledit couple étant calculé après avoir mesuré ladite différence de pression entre l'amont et l'aval de ladite deuxième machine hydraulique (14) et, de préférence, la cylindrée de ladite deuxième machine hydraulique (8), dont on soustrait le couple dû à l'accélération du véhicule, de manière à obtenir un couple dû uniquement à la charge dudit véhicule.

**5.** Procédé selon l'une quelconque des revendications 1 à 4, dans lequel ladite comparaison de ladite valeur absolue de ladite variable est réalisée uniquement dans l'une des conditions suivantes :

dans le cas où ledit véhicule se trouve dans une montée et où une demande de desserrage dudit frein de stationnement est faite pour avancer dans ladite montée ; et
dans le cas où ledit véhicule se trouve dans une descente et où une demande de desserrage dudit frein de stationnement est faite pour faire marche arrière dans ladite descente.

**6.** Procédé selon l'une quelconque des revendications 1 à 5, dans lequel ledit frein de stationnement est desserré sans réaliser ladite comparaison de ladite valeur absolue de ladite variable dans l'une quelconque des conditions suivantes :
dans le cas où ledit véhicule se trouve dans une montée et où une demande de desserrage dudit frein de stationnement est faite pour faire marche arrière dans ladite montée ; et dans le cas où ledit véhicule se trouve dans une descente et où une demande de desserrage dudit frein de stationnement est faite pour avancer dans ladite descente.

**7.** Procédé selon l'une quelconque des revendications 5 ou 6, dans lequel la détection du fait que ledit véhicule se trouve dans une montée ou dans une descente se fait au moyen du signe de ladite différence de pression entre l'amont et l'aval de ladite deuxième machine hydraulique (14).

**8.** Procédé selon l'une quelconque des revendications 5 ou 6, dans lequel la détection du fait que ledit véhicule se trouve dans une montée ou dans une descente se fait au moyen de moyens de détection configurés pour détecter la pente du sol sur lequel ledit véhicule est stationné.

**9.** Procédé selon l'une quelconque des revendications 1 à 8, ledit procédé comprenant les étapes suivantes :

a. Réception d'une commande de serrage dudit frein de stationnement dans ledit véhicule ;

b. Mesure d'une différence de pression entre l'amont et l'aval de ladite deuxième machine hydraulique (14) et, de préférence, de la cylindrée de ladite deuxième machine hydraulique (14) ;
c. Serrage dudit frein de stationnement ;
d. Réception d'une commande de desserrage dudit frein de stationnement ;
e. Desserrage dudit frein de stationnement si la valeur absolue de ladite variable mesurée préalablement au desserrage dudit frein de stationnement est supérieure à la valeur absolue de la même variable mesurée préalablement au serrage dudit frein de stationnement.

**10.** Procédé selon l'une quelconque des revendications 1 à 9, dans lequel ledit véhicule est un engin de travaux mobile.

**11.** Procédé selon l'une quelconque des revendications 1 à 10, dans lequel ladite première cylindrée de ladite première machine hydraulique (8) est configurée pour être réglée, et dans lequel, de préférence, ladite deuxième cylindrée de ladite deuxième machine hydraulique (14) est réglable.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011008707 A1

- WO 2013029054 A1